# EUROPEAN PATENT SPECIFICATION

(11) **EP 4 703 099 B1**
(45) Date of publication and mention of the grant of the patent: **02.12.2026**
(21) Application number: 25192628.3
(22) Date of filing: 29.07.2025
(51) Int. Cl.: B25J 17/00, B62D 57/032

(54) **SIMULATION ROBOT SHANK MECHANISM**
SIMULATION ROBOT SHAFTMECHANISM
MÉCANISME DE ROBOT SIMULÉ AVEC SHANK

(30) Priority: 03.09.2024 CN 202411229075; 03.09.2024 CN 202422162434 U
(43) Date of publication of application: 04.03.2026
(73) Proprietor: Booster Robotics Technology Co., Ltd, Beijing (CN)
(72) Inventor: LI, Kang, Beijing (CN)
(74) Representative: Bayramoglu et al.

(56) References cited:
- CN-A- 108 556 957
- CN-A- 116 277 124
- CN-A- 118 289 111
- CN-U- 207 710 781
- CN-U- 214 265 581
- CN-U- 221 091 033

## Description

### TECHNICAL FIELD

This disclosure belongs to technical field of robots, and in particular, to a simulation robot shank mechanism.

### BACKGROUND

With the deepening of people's understanding of the intelligent essence of robot technology, robot technology has begun to continuously penetrate into various fields of human activities. Combined with the application characteristics of these fields, people have developed a variety of special robots and various intelligent robots with perception, decisionmaking, action and interaction capabilities.

A robot is a machine device that performs work automatically, which can receive human commands, run pre-programmed programs, or act in accordance with principles and guidelines formulated by artificial intelligence technology. The robot is a product of advanced integration cybernetics, mechanical electronics, computers, materials and bionics, and has important uses in various fields such as industry, medicine, agriculture, service industry, construction industry, and even military.

For simulation robots, a reliable mechanical structure design is a prerequisite for ensuring the realization of robot software control or programmed actions. Especially for humanoid bipedal robots, the weight distribution of the legs is an important factor affecting the performance of the robot. The layout compactness, joint integration degree, and universality of the leg structure are also critical. How to design a simulation robot shank mechanism with a compact layout, a high joint integration degree, and high flexibility has important application value. CN118289111A discloses a leg power structure of a humanoid robot and the humanoid robot. The leg power structure of the humanoid robot comprises a stepping driving unit, a thigh body assembly, a shank body assembly and a foot assembly which are arranged on the waist of the humanoid robot and connected in sequence, and the stepping driving unit is used for driving the whole leg power structure to swing front and back; the thigh body assembly comprises a first thigh body and a second thigh body, the shank body assembly comprises a shank body, and the foot assembly comprises a foot supporting piece; a hip joint driving unit is arranged at the upper part of the first thigh body to drive the whole leg power structure to swing left and right; a first driving unit is arranged between the first thigh body and the second thigh body so that the first thigh body and the second thigh body can rotate in the relative circumferential direction.

### SUMMARY

Therefore, this disclosure provides a simulation robot shank mechanism, which has a more compact structure layout, a high joint integration degree, and better flexibility.

To achieve the above objective, this disclosure provides a technical solution as follows: a simulation robot shank mechanism, including a shank assembly, an ankle assembly, and a foot plate assembly, where the shank assembly includes a knee joint power output structural member, a knee joint passive end structural member, a shank structural member, a first ankle joint drive motor, a second ankle joint drive motor, a first rocker arm swing member, and a second rocker arm swing member; the ankle assembly includes an ankle cross shaft member and an ankle connecting rod;
a knee joint drive motor is arranged between the knee joint power output structural member and the knee joint passive end structural member; a power output end of the knee joint drive motor is connected to the knee joint power output structural member, and the other end of the knee joint drive motor is connected to the knee joint passive end structural member;
an upper portion of the shank structural member is connected between a lower portion of the knee joint power output structural member and a lower portion of the knee joint passive end structural member, a lower portion of the shank structural member is connected to the ankle cross shaft member, and the ankle cross shaft member is fixed above the foot plate assembly;
a first motor mounting position and a second motor mounting position are formed on the shank structural member; the first ankle joint drive motor is fixed to the first motor mounting position, a power output end of the first ankle joint drive motor is connected to an upper portion of the first rocker arm swing member, and a lower portion of the first rocker arm swing member is connected to one side of the ankle connecting rod; and
the second ankle joint drive motor is fixed to the second motor mounting position, a power output end of the second ankle joint drive motor is connected to an upper portion of the second rocker arm swing member, and a lower portion of the second rocker arm swing member is connected to the other side of the ankle connecting rod. A lower end of the ankle connecting rod is provided with a foot plate adapter, the ankle cross shaft member is connected to the foot plate adapter, and the foot plate adapter is fixed above the foot plate assembly. A first hinge clamping groove is formed at a lower end of the shank structural member, and a second hinge clamping groove is formed in the foot plate adapter; a transverse accommodating groove and a longitudinal accommodating groove are formed in the ankle cross shaft member, the transverse accommodating groove is provided with a transverse hinge portion, and the longitudinal accommodating groove is provided with a longitudinal hinge portion; the transverse hinge portion and the longitudinal hinge portion are distributed in a cross shape; the transverse hinge portion is hinged to the first hinge clamping groove; and the longitudinal hinge portion is hinged to the second hinge clamping groove. The transverse hinge portion includes a first ankle transverse shaft needle roller bearing, a first ankle transverse shaft body, a left ankle transverse shaft gasket, a left ankle shaft end screw, a right ankle transverse shaft gasket, and a right ankle shaft end screw; the first ankle transverse shaft needle roller bearing is located inside the transverse accommodating groove, and the first ankle transverse shaft body passes through a center of the first ankle transverse shaft needle roller bearing, a center of the left ankle transverse shaft gasket, and a center of the right ankle transverse shaft gasket; the left ankle transverse shaft gasket is filled on one side of the transverse accommodating groove, and the right ankle transverse shaft gasket is filled on the other side of the transverse accommodating groove; one end of the first ankle transverse shaft body is exposed on an outer side of the left ankle transverse shaft gasket, and the other end of the first ankle transverse shaft body is exposed on an outer side of the right ankle transverse shaft gasket; the first hinge clamping groove is hinged to the first ankle transverse shaft body of the transverse hinge portion; and the left ankle shaft end screw is connected to one end of the first ankle transverse shaft body, and the right ankle shaft end screw is connected to the other end of the first ankle transverse shaft body.

As a preferred solution of the simulation robot shank mechanism, an orientation of the power output end of the first ankle joint drive motor is opposite to an orientation of the power output end of the second ankle joint drive motor; and
a length of the first rocker arm swing member is greater than that of the second rocker arm swing member.

As a preferred solution of the simulation robot shank mechanism, the longitudinal hinge portion includes a second ankle transverse shaft needle roller bearing, a second ankle transverse shaft body, a front ankle transverse shaft gasket, a front ankle shaft end screw, a rear ankle transverse shaft gasket, and a rear ankle shaft end screw;
the second ankle transverse shaft needle roller bearing is located inside the longitudinal accommodating groove, and the second ankle transverse shaft body passes through a center of the second ankle transverse shaft needle roller bearing, a center of the front ankle transverse shaft gasket, and a center of the rear ankle transverse shaft gasket; the front ankle transverse shaft gasket is filled on one side of the longitudinal accommodating groove, and the rear ankle transverse shaft gasket is filled on the other side of the longitudinal accommodating groove;
one end of the second ankle transverse shaft body is exposed on an outer side of the front ankle transverse shaft gasket, and the other end of the second ankle transverse shaft body is exposed on an outer side of the rear ankle transverse shaft gasket; the second hinge clamping groove is hinged to the second ankle transverse shaft body of the longitudinal hinge portion; and
the front ankle shaft end screw is connected to one end of the second ankle transverse shaft body, and the rear ankle shaft end screw is connected to the other end of the second ankle transverse shaft body.

As a preferred solution of the simulation robot shank mechanism, the first rocker arm swing member includes an ankle long connecting rod, a first ankle rocker arm swing member, a first spherical bearing, a first connecting rod pin shaft, and a second spherical bearing;
a first mounting hole is formed in an upper portion of the ankle long connecting rod, a second mounting hole is formed in a lower portion of the ankle long connecting rod, and the first ankle rocker arm swing member is connected to the first mounting hole through the first spherical bearing and the first connecting rod pin shaft; and the second spherical bearing is connected to the second mounting hole, and the ankle long connecting rod is hinged to one side of the ankle connecting rod through the second spherical bearing.

As a preferred solution of the simulation robot shank mechanism, a first drive interface is formed in the first ankle rocker arm swing member, and the first ankle rocker arm swing member is connected to the power output end of the first ankle joint drive motor through the first drive interface.

As a preferred solution of the simulation robot shank mechanism, the second rocker arm swing member includes an ankle short connecting rod, a second ankle rocker arm swing member, a third spherical bearing, a second connecting rod pin shaft, and a fourth spherical bearing;
a third mounting hole is formed in an upper portion of the ankle short connecting rod, a fourth mounting hole is formed in a lower portion of the ankle short connecting rod, and the second ankle rocker arm swing member is connected to the third mounting hole through the third spherical bearing and the second connecting rod pin shaft; and the fourth spherical bearing is connected to the fourth mounting hole, and the ankle short connecting rod is hinged to the other side of the ankle connecting rod through the fourth spherical bearing.

As a preferred solution of the simulation robot shank mechanism, a second drive interface is formed in the second ankle rocker arm swing member, and the second ankle rocker arm swing member is connected to the power output end of the second ankle joint drive motor through the second drive interface.

The beneficial effects of this disclosure are as follows: the shank assembly, the ankle assembly, and the foot plate assembly are arranged; the shank assembly includes the knee joint power output structural member, the knee joint passive end structural member, the shank structural member, the first ankle joint drive motor, the second ankle joint drive motor, the first rocker arm swing member, and the second rocker arm swing member; the ankle assembly includes the ankle cross shaft member and the ankle connecting rod; the knee joint drive motor is arranged between the knee joint power output structural member and the knee joint passive end structural member; the power output end of the knee joint drive motor is connected to the knee joint power output structural member, and the other end of the knee joint drive motor is connected to the knee joint passive end structural member; the upper portion of the shank structural member is connected between the lower portion of the knee joint power output structural member and the lower portion of the knee joint passive end structural member, the lower portion of the shank structural member is connected to the ankle cross shaft member, and the ankle cross shaft member is fixed above the foot plate assembly; the first motor mounting position and the second motor mounting position are formed on the shank structural member; the first ankle joint drive motor is fixed to the first motor mounting position, the power output end of the first ankle joint drive motor is connected to the upper portion of the first rocker arm swing member, and the lower portion of the first rocker arm swing member is connected to one side of the ankle connecting rod; and the second ankle joint drive motor is fixed to the second motor mounting position, the power output end of the second ankle joint drive motor is connected to the upper portion of the second rocker arm swing member, and the lower portion of the second rocker arm swing member is connected to the other side of the ankle connecting rod. According to this disclosure, the shank structure is high in overall layout compactness and high in joint integration degree, so that a large movement range of a robot can be achieved, and flexibility and universality are improved.

### BRIEF DESCRIPTION OF THE DRAWINGS

To describe the technical solutions in the implementations or the prior art of this disclosure more clearly, a brief introduction will be given below to the drawings required in the description of the implementations or the prior art. Apparently, the drawings in the following description are merely exemplary, and those of ordinary skill in the art may further derive other implementation drawings according to the provided drawings without creative labor.

The structures, proportions, sizes and the like shown in the specification are only intended for matching the content disclosed herein and facilitating the understanding and reading of those skilled in the art rather than for limiting the implementation conditions of this disclosure. Therefore, they have no technically substantial significance, and any structural modifications, changes in proportions, or adjustments in size, without affecting the effects and objectives that this disclosure can produce and achieve, shall still fall within the scope of technical content disclosed in this disclosure.
FIG. 1 is a three-dimensional schematic diagram of a simulation robot adopting a shank mechanism according to an embodiment of this disclosure;
FIG. 2 is a three-dimensional schematic diagram of a simulation robot shank mechanism according to an embodiment of this disclosure;
FIG. 3 is a three-dimensional schematic diagram of a first view angle of a part of shank mechanism of a simulation robot according to an embodiment of this disclosure;
FIG. 4 is a three-dimensional schematic diagram of a second view angle of a part of shank mechanism of a simulation robot according to an embodiment of this disclosure;
FIG. 5 is a three-dimensional schematic diagram of a third view angle of a part of shank mechanism of a simulation robot according to an embodiment of this disclosure;
FIG. 6 is a decomposition schematic diagram of a part of shank mechanism of a simulation robot according to an embodiment of this disclosure; and
FIG. 7 is a decomposition schematic diagram of an ankle cross shaft member of a part of a shank mechanism of a simulation robot according to an embodiment of this disclosure.

In the figures: 1. shank assembly; 2. ankle assembly; 3. foot plate assembly; 4. knee joint power output structural member; 5. knee joint passive end structural member; 6. shank structural member; 7. first ankle joint drive motor; 8. second ankle joint drive motor; 9. first rocker arm swing member; 10. second rocker arm swing member; 11. ankle cross shaft member; 12. ankle connecting rod; 13. knee joint drive motor; 14. first motor mounting position; 15. second motor mounting position; 16. foot plate adapter; 17. first hinge clamping groove; 18. second hinge clamping groove; 19. transverse accommodating groove; 20. longitudinal accommodating groove; 21. transverse hinge portion; 22. longitudinal hinge portion; 23. first ankle transverse shaft needle roller bearing; 24. first ankle transverse shaft body; 25. left ankle transverse shaft gasket; 26. left ankle shaft end screw; 27. right ankle transverse shaft gasket; 28. right ankle shaft end screw; 29. second ankle transverse shaft needle roller bearing; 30. second ankle transverse shaft body; 31. front ankle transverse shaft gasket; 32. front ankle shaft end screw; 33. rear ankle transverse shaft gasket; 34. rear ankle shaft end screw; 35. ankle long connecting rod; 36. first ankle rocker arm swing member; 37. first spherical bearing; 38. first connecting rod pin shaft; 39. second spherical bearing; 40. first drive interface; 41. ankle short connecting rod; 42. second ankle rocker arm swing member; 43. third spherical bearing; 44. second connecting rod pin shaft; 45. fourth spherical bearing; 46. second drive interface.

### DETAILED DESCRIPTION OF THE EMBODIMENTS

The following illustrates the implementations of this disclosure through specific embodiments, and those skilled in the art can easily understand other advantages and beneficial effects of this disclosure from the content disclosed in the specification. Apparently, the described embodiments are some but not all of the embodiments of this disclosure. Based on the embodiments in this disclosure, all other embodiments obtained by those of ordinary skill in the art without making creative labor fall within the scope of protection of this disclosure.

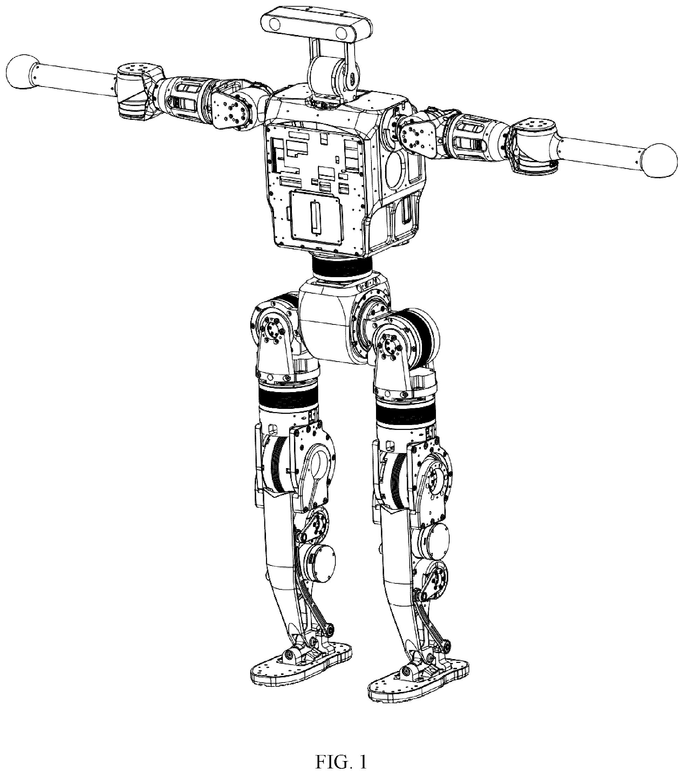

To fully disclose the simulation robot shank mechanism in the embodiment of this disclosure, the following content describes a simulation robot adopting the shank mechanism of the embodiment of this disclosure:
referring to FIG. 1, the simulation robot adopting the shank mechanism of the embodiment of this disclosure is provided with a head mechanism, a trunk mechanism, a left arm mechanism, a right arm mechanism, a hip mechanism, a left leg mechanism, and a right leg mechanism;
the head mechanism is connected to an upper end of the trunk mechanism, and the head mechanism has two degrees of freedom of motion: the head mechanism performs rotation and pitching motion relative to the trunk mechanism;
the left arm mechanism is connected to a left side of the trunk mechanism, and the left arm mechanism has four degrees of freedom of motion: the left arm mechanism performs rotation motion relative to the trunk mechanism, the left arm mechanism performs pitching motion relative to the trunk mechanism, an upper arm of the left arm mechanism rotates, and an elbow of the left arm mechanism swings forwards;
the right arm mechanism is connected to a right side of the trunk mechanism, and the right arm mechanism has four degrees of freedom of motion: the right arm mechanism performs rotation motion relative to the trunk mechanism, the right arm mechanism performs pitching motion relative to the trunk mechanism, an upper arm of the right arm mechanism rotates, and an elbow of the right arm mechanism swings forwards;
the hip mechanism is connected to a lower end of the trunk mechanism, and the hip mechanism has one degree of freedom of motion: the hip mechanism performs rotation motion relative to the trunk mechanism;
the left leg mechanism is connected to a left side of the hip mechanism, and the left leg mechanism has six degrees of freedom of motion: forward swing, side swing, rotation, knee forward swing, ankle forward swing, and ankle side swing motion of the left leg mechanism; and
the right leg mechanism is connected to a right side of the hip mechanism, and the right leg mechanism has six degrees of freedom of motion: forward swing, side swing, rotation, knee forward swing, ankle forward swing, and ankle side swing motion of the right leg mechanism.

A main controller and drive motors of the head mechanism, the trunk mechanism, the left arm mechanism, the right arm mechanism, the hip mechanism, the left leg mechanism, and the right leg mechanism are powered through a battery pack, and actions of the head mechanism, the trunk mechanism, the left arm mechanism, the right arm mechanism, the hip mechanism, the left leg mechanism, and the right leg mechanism are controlled through the main controller, so that the head mechanism performs rotation and pitching motion relative to the trunk mechanism, the left arm mechanism performs rotation motion relative to the trunk mechanism, the left arm mechanism performs pitching motion relative to the trunk mechanism, and the upper arm of the left arm mechanism rotates, and the elbow of the left arm mechanism swings forwards; the right arm mechanism performs rotation motion relative to the trunk mechanism, the right arm mechanism performs pitching motion relative to the trunk mechanism, and the upper arm of the right arm mechanism rotates, and the elbow of the right arm mechanism swings forwards; the hip mechanism performs rotation motion relative to the trunk mechanism; rotation of the hip mechanism relative to the left leg mechanism is achieved; rotation of the hip mechanism relative to the right leg mechanism is achieved; forward swing, side swing, rotation, knee forward swing, ankle forward swing, and ankle side swing motion of the left leg mechanism are achieved; and forward swing, side swing, rotation, knee forward swing, ankle forward swing, and ankle side swing motion of the right leg mechanism are achieved.

A binocular camera is mounted at a top end of the head mechanism. Rotation and pitching motion of the head binocular camera can be achieved through a head rotation drive motor and a head pitching drive motor. The head rotation drive motor for controlling the rotation of the binocular camera is fixed inside a trunk frame of the trunk mechanism, an output flange of the head rotation drive motor is connected to a fixed end of the head pitching drive motor for controlling the pitching of the binocular camera, and an output flange of the head pitching drive motor for controlling the pitching of the binocular camera is connected to a camera mounting assembly, thereby realizing the movement of the binocular camera.

A left arm rotation drive motor in the trunk frame can drive a left arm pitching drive motor, a left upper arm, a left elbow rotation drive motor, a left elbow swing drive motor, and a left forearm to rotate. The left arm pitching drive motor can drive the left upper arm, the left elbow rotation drive motor, the left elbow swing drive motor, and the left forearm to pitch. The left elbow rotation drive motor can drive the left elbow swing drive motor and the left forearm to rotate, and the left elbow swing drive motor can drive the left forearm to swing. A right arm rotation drive motor in the trunk frame can drive a right arm pitching drive motor, a right upper arm, a right elbow rotation drive motor, a right elbow swing drive motor, and a right forearm to rotate. The right arm pitching drive motor can drive the right upper arm, the right elbow rotation drive motor, the right elbow swing drive motor, and the right forearm to pitch. The right elbow rotation drive motor can drive the right elbow swing drive motor and the right forearm to rotate, and the right elbow swing drive motor can drive the right forearm to swing. A waist rotation drive motor can drive a hip structural member to rotate through a hip flange. A left leg swing drive motor in the hip structural member can drive the entire left leg mechanism to swing, and a right leg swing drive motor in the hip structural member can drive the entire right leg mechanism to swing.

For the left leg swing drive motor and the right leg swing drive motor, a clamping structural member can be connected to the hip structural member, and the clamping structural member fixes the left leg swing drive motor and the right leg swing drive motor in the hip structural member through a bolt. The hip mechanism drives a cross-leg drive assembly to swing through a leg swing drive motor, and a cross-leg drive motor of the cross-leg drive assembly can drive a thigh assembly and a shank assembly to stride outwards. The cross-leg drive motor is fixed by a cross-swing output structural member and a cross-swing passive end structural member, and performs power output through the cross-swing output structural member. The leg rotation drive motor can drive a leg rotation power output structural member between the cross-swing output structural member and the cross-swing passive end structural member to rotate, thereby driving a leg extension member, a knee joint drive motor, and a lower shank assembly to rotate as a whole.

The knee joint drive motor can drive the shank assembly to swing back and forth. The knee joint drive motor is fixed by a knee joint passive end structural member and a knee joint power output structural member, and the knee joint drive motor drives a shank structural member to swing back and forth through the knee joint power output structural member. A first ankle joint drive motor drives an ankle assembly to swing through a first rocker arm swing member, and a second ankle joint drive motor drives the ankle assembly to swing through a second rocker arm swing member. The lower portions of the first rocker arm swing member and the second rocker arm swing member swing relative to an ankle connecting rod, and the shank structural member swings relative to an ankle cross shaft member. When the first ankle joint drive motor drives the first rocker arm swing member and the second ankle joint drive motor drives the second rocker arm swing member in a same direction, the ankle cross shaft member performs forward swing motion relative to the shank structural member. When the first ankle joint drive motor drives the first rocker arm swing member and the second ankle joint drive motor drives the second rocker arm swing member in an opposite direction, the ankle cross shaft member performs side swing motion relative to the shank structural member. The ankle assembly can drive a foot plate assembly to perform corresponding forward swing and side swing motion.

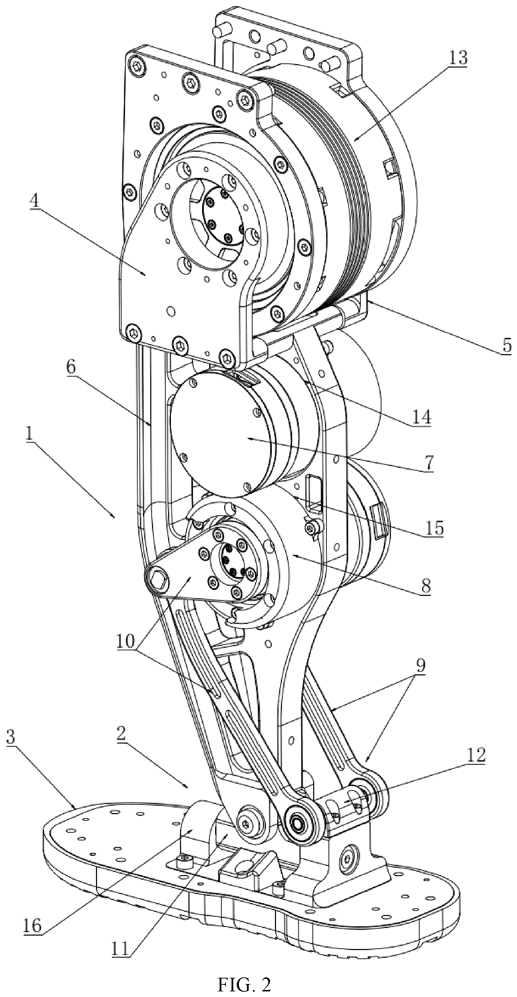

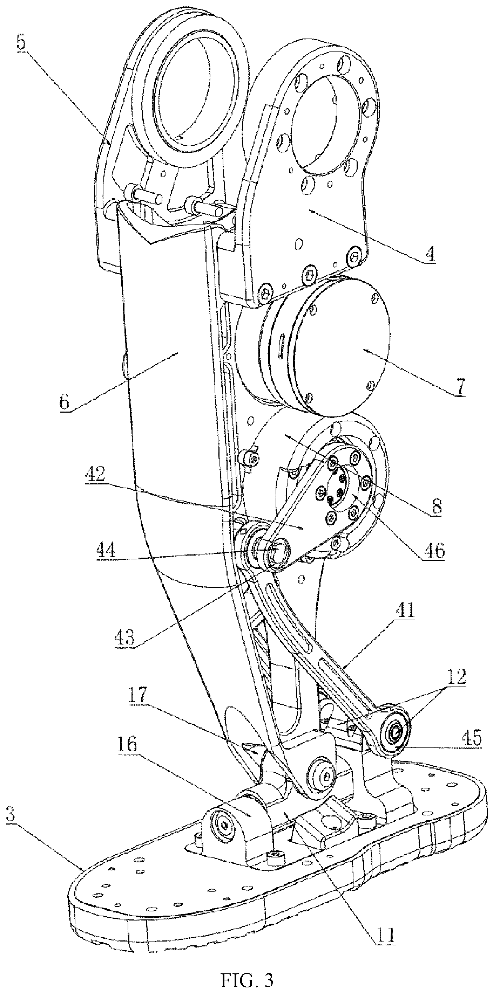

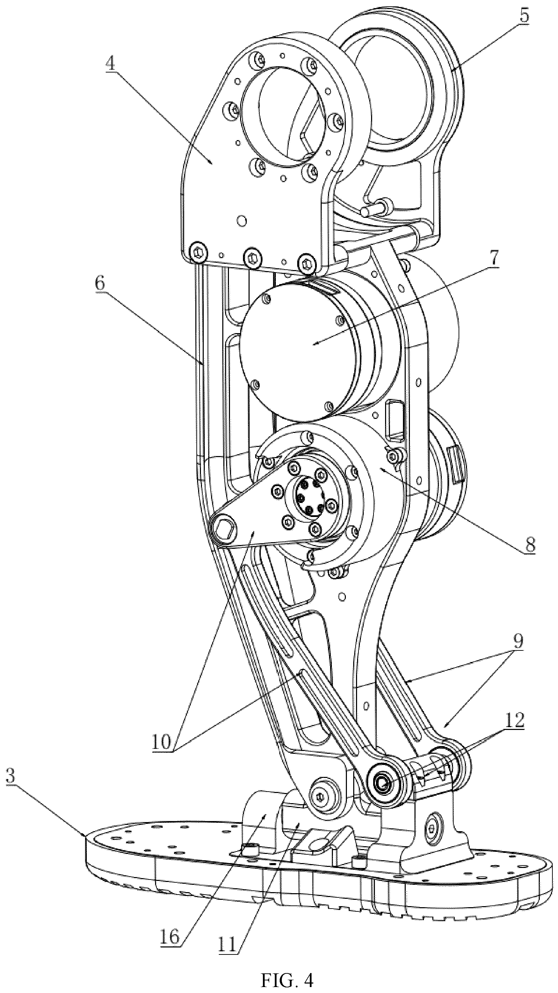

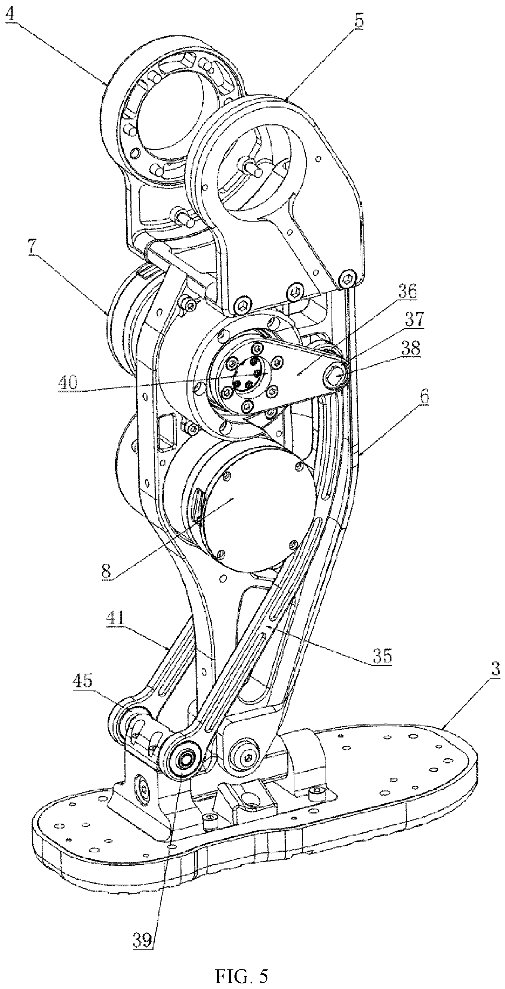

On the basis of the simulation robot developed by the applicant:
referring to FIG. 1, FIG. 2, FIG. 3, FIG. 4, and FIG. 5, an embodiment of this disclosure provides a simulation robot shank mechanism, including a shank assembly 1, an ankle assembly 2, and a foot plate assembly 3, where the shank assembly 1 includes a knee joint power output structural member 4, a knee joint passive end structural member 5, a shank structural member 6, a first ankle joint drive motor 7, a second ankle joint drive motor 8, a first rocker arm swing member 9, and a second rocker arm swing member 10; the ankle assembly 2 includes an ankle cross shaft member 11 and an ankle connecting rod 12;
a knee joint drive motor 13 is arranged between the knee joint power output structural member 4 and the knee joint passive end structural member 5; a power output end of the knee joint drive motor 13 is connected to the knee joint power output structural member 4, and the other end of the knee joint drive motor 13 is connected to the knee joint passive end structural member 5;
an upper portion of the shank structural member 6 is connected between a lower portion of the knee joint power output structural member 4 and a lower portion of the knee joint passive end structural member 5, a lower portion of the shank structural member 6 is connected to the ankle cross shaft member 11, and the ankle cross shaft member 11 is fixed above the foot plate assembly 3;
a first motor mounting position 14 and a second motor mounting position 15 are formed on the shank structural member 6; the first ankle joint drive motor 7 is fixed to the first motor mounting position 14, a power output end of the first ankle joint drive motor 7 is connected to an upper portion of the first rocker arm swing member 9, and a lower portion of the first rocker arm swing member 9 is connected to one side of the ankle connecting rod 12;
the second ankle joint drive motor 8 is fixed to the second motor mounting position 15, a power output end of the second ankle joint drive motor 8 is connected to an upper portion of the second rocker arm swing member 10, and a lower portion of the second rocker arm swing member 10 is connected to the other side of the ankle connecting rod 12; and
a lower end of the ankle connecting rod 12 is provided with a foot plate adapter 16, the ankle cross shaft member 11 is connected to the foot plate adapter 16, and the foot plate adapter 16 is fixed above the foot plate assembly 3.

Specifically, the knee joint drive motor 13 is fixed by the knee joint passive end structural member 5 and the knee joint power output structural member 4, and the knee joint drive motor 13 drives the shank structural member 6 to swing back and forth through the knee joint power output structural member 4. The first ankle joint drive motor 7 drives an ankle assembly 2 to swing through the first rocker arm swing member 9, and the second ankle joint drive motor 8 drives the ankle assembly to swing through the second rocker arm swing member 10. The lower portions of the first rocker arm swing member 9 and the second rocker arm swing member 10 swing relative to the ankle connecting rod 12, and the shank structural member 6 swings relative to the ankle cross shaft member 11. When the first ankle joint drive motor 7 drives the first rocker arm swing member 9 and the second ankle joint drive motor 8 drives the second rocker arm swing member 10 in the same direction, the ankle cross shaft member 11 performs forward swing motion relative to the shank structural member 6. When the first ankle joint drive motor 7 drives the first rocker arm swing member 9 and the second ankle joint drive motor 8 drives the second rocker arm swing member 10 in the opposite direction, the ankle cross shaft member 11 performs side swing motion relative to the shank structural member 6. The ankle assembly 2 can drive the foot plate assembly 3 to perform corresponding forward swing and side swing motion.

An orientation of the power output end of the first ankle joint drive motor 7 is opposite to an orientation of the power output end of the second ankle joint drive motor 8; and a length of the first rocker arm swing member 9 is greater than that of the second rocker arm swing member 10. Thus, when the first ankle joint drive motor 7 drives the first rocker arm swing member 9 and the second ankle joint drive motor 8 drives the second rocker arm swing member 10 in the same direction, the ankle cross shaft member 11 performs forward swing motion relative to the shank structural member 6. When the first ankle joint drive motor 7 drives the first rocker arm swing member 9 and the second ankle joint drive motor 8 drives the second rocker arm swing member 10 in the opposite direction, the ankle cross shaft member 11 performs side swing motion relative to the shank structural member 6. In addition, the first ankle joint drive motor 7, the second ankle joint drive motor 8, the first rocker arm swing member 9, and the second rocker arm swing member 10 are more compact in structure, and the activity flexibility is higher.

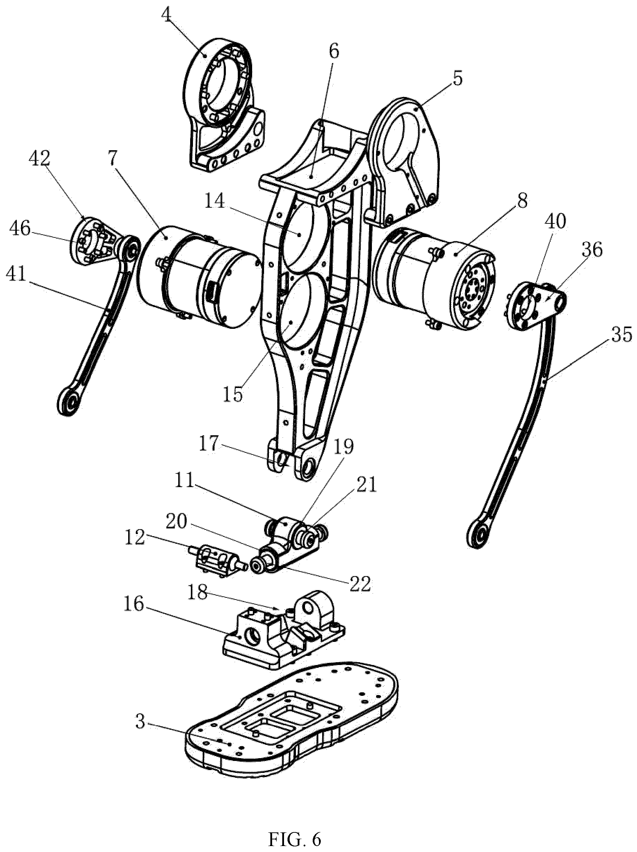

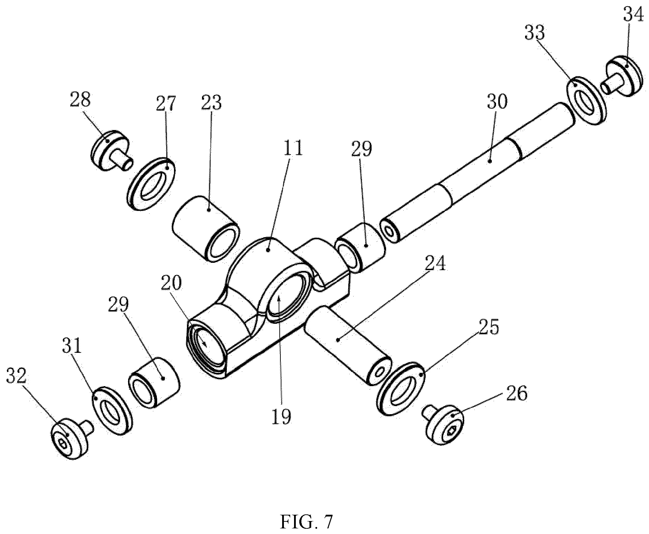

Referring to FIG. 6 and FIG. 7, in this embodiment, a first hinge clamping groove 17 is formed at a lower end of the shank structural member 6, and a second hinge clamping groove 18 is formed in the foot plate adapter 16; a transverse accommodating groove 19 and a longitudinal accommodating groove 20 are formed in the ankle cross shaft member 11, the transverse accommodating groove 19 is provided with a transverse hinge portion 21, and the longitudinal accommodating groove 20 is provided with a longitudinal hinge portion 22; the transverse hinge portion 21 and the longitudinal hinge portion 22 are distributed in a cross shape; the transverse hinge portion 21 is hinged to the first hinge clamping groove 17; and the longitudinal hinge portion 22 is hinged to the second hinge clamping groove 18.

Specifically, the first hinge clamping groove 17 and the transverse hinge portion 21 serve to connect the shank structural member 6 and the ankle cross shaft member 11, and the shank structural member 6 rotates relative to the transverse hinge portion 21 of the ankle cross shaft member 11 through the first hinge clamping groove 17. The second hinge clamping groove 18 and the longitudinal hinge portion 22 serve to connect the foot plate adapter 16 and the ankle cross shaft member 11, and the foot plate adapter 16 rotates relative to the longitudinal hinge portion 22 of the ankle cross shaft member 11 through the second hinge clamping groove 18. The transverse hinge portion 21 and the longitudinal hinge portion 22 form a cross-shaped ankle cross shaft member 11 through the transverse accommodating groove 19 and the longitudinal accommodating groove 20, so that the structure is more compact, and the activity flexibility is higher.

In this embodiment, the transverse hinge portion 21 includes a first ankle transverse shaft needle roller bearing 23, a first ankle transverse shaft body 24, a left ankle transverse shaft gasket 25, a left ankle shaft end screw 26, a right ankle transverse shaft gasket 27, and a right ankle shaft end screw 28; the first ankle transverse shaft needle roller bearing 23 is located inside the transverse accommodating groove 19, and the first ankle transverse shaft body 24 passes through a center of the first ankle transverse shaft needle roller bearing 23, a center of the left ankle transverse shaft gasket 25, and a center of the right ankle transverse shaft gasket 27; the left ankle transverse shaft gasket 25 is filled on one side of the transverse accommodating groove 19, and the right ankle transverse shaft gasket 27 is filled on the other side of the transverse accommodating groove 19; one end of the first ankle transverse shaft body 24 is exposed on an outer side of the left ankle transverse shaft gasket 25, and the other end of the first ankle transverse shaft body 24 is exposed on an outer side of the right ankle transverse shaft gasket 27; the first hinge clamping groove 17 is hinged to the first ankle transverse shaft body 24 of the transverse hinge portion 21; and the left ankle shaft end screw 26 is connected to one end of the first ankle transverse shaft body 24, and the right ankle shaft end screw 28 is connected to the other end of the first ankle transverse shaft body 24.

Specifically, the first ankle transverse shaft needle roller bearing 23 is sleeved inside the transverse accommodating groove 19, the first ankle transverse shaft body 24 is sleeved inside the first ankle transverse shaft needle roller bearing 23, and the left ankle transverse shaft gasket 25 and the right ankle transverse shaft gasket 27 are respectively sleeved on left and right sides of the transverse accommodating groove 19. After a lower portion of the shank structural member 6 is connected to the first ankle transverse shaft body 24 through the first hinge clamping groove 17, the shank structural member 6 is limited through the left ankle shaft end screw 26 and the right ankle shaft end screw 28, so that the first ankle transverse shaft body 24 can rotate relative to the transverse accommodating groove 19, and then the shank structural member 6 rotates relative to the transverse hinge portion 21 of the ankle cross shaft member 11 through the first hinge clamping groove 17.

In this embodiment, the longitudinal hinge portion 22 includes a second ankle transverse shaft needle roller bearing 29, a second ankle transverse shaft body 30, a front ankle transverse shaft gasket 31, a front ankle shaft end screw 32, a rear ankle transverse shaft gasket 33, and a rear ankle shaft end screw 34; the second ankle transverse shaft needle roller bearing 29 is located inside the longitudinal accommodating groove 20, and the second ankle transverse shaft body 30 passes through a center of the second ankle transverse shaft needle roller bearing 29, a center of the front ankle transverse shaft gasket 31, and a center of the rear ankle transverse shaft gasket 33; the front ankle transverse shaft gasket 31 is filled on one side of the longitudinal accommodating groove 20, and the rear ankle transverse shaft gasket 33 is filled on the other side of the longitudinal accommodating groove 20; one end of the second ankle transverse shaft body 30 is exposed on an outer side of the front ankle transverse shaft gasket 31, and the other end of the second ankle transverse shaft body 30 is exposed on an outer side of the rear ankle transverse shaft gasket 33; the second hinge clamping groove 18 is hinged to the second ankle transverse shaft body 30 of the longitudinal hinge portion 22; and the front ankle shaft end screw 32 is connected to one end of the second ankle transverse shaft body 30, and the rear ankle shaft end screw 34 is connected to the other end of the second ankle transverse shaft body 30.

Specifically, the second ankle transverse shaft needle roller bearing 29 is sleeved inside the longitudinal accommodating groove 20, the second ankle transverse shaft body 30 is sleeved inside the second ankle transverse shaft needle roller bearing 29, and the front ankle transverse shaft gasket 31 and the rear ankle transverse shaft gasket 33 are respectively sleeved on front and rear sides of the longitudinal accommodating groove 20. After the foot plate adapter 16 is connected to the second ankle transverse shaft body 30 through the second hinge clamping groove 18, the foot plate adapter 16 is limited through the front ankle shaft end screw 32 and the rear ankle shaft end screw 34, so that the second ankle transverse shaft body 30 can rotate relative to the longitudinal accommodating groove 20, and then the foot plate adapter 16 rotates relative to the longitudinal hinge portion 22 of the ankle cross shaft member 11 through the second hinge clamping groove 18.

In this embodiment, the first rocker arm swing member 9 includes an ankle long connecting rod 35, a first ankle rocker arm swing member 36, a first spherical bearing 37, a first connecting rod pin shaft 38, and a second spherical bearing 39; a first mounting hole is formed in an upper portion of the ankle long connecting rod 35, a second mounting hole is formed in a lower portion of the ankle long connecting rod 35, and the first ankle rocker arm swing member 36 is connected to the first mounting hole through the first spherical bearing 37 and the first connecting rod pin shaft 38; the second spherical bearing 39 is connected to the second mounting hole, and the ankle long connecting rod 35 is hinged to one side of the ankle connecting rod 12 through the second spherical bearing 39; a first drive interface 40 is formed in the first ankle rocker arm swing member 36, and the first ankle rocker arm swing member 36 is connected to the power output end of the first ankle joint drive motor 7 through the first drive interface 40; the second rocker arm swing member 10 includes an ankle short connecting rod 41, a second ankle rocker arm swing member 42, a third spherical bearing 43, a second connecting rod pin shaft 44, and a fourth spherical bearing 45; a third mounting hole is formed in an upper portion of the ankle short connecting rod 41, a fourth mounting hole is formed in a lower portion of the ankle short connecting rod 41, and the second ankle rocker arm swing member 42 is connected to the third mounting hole through the third spherical bearing 43 and the second connecting rod pin shaft 44; the fourth spherical bearing 45 is connected to the fourth mounting hole, and the ankle short connecting rod 41 is hinged to the other side of the ankle connecting rod 12 through the fourth spherical bearing 45; and a second drive interface 46 is formed in the second ankle rocker arm swing member 42, and the second ankle rocker arm swing member 42 is connected to the power output end of the second ankle joint drive motor 8 through the second drive interface 46.

Specifically, the power output end of the first ankle joint drive motor 7 drives the first ankle rocker arm swing member 36 through the first drive interface 40, the first ankle rocker arm swing member 36 is hinged to the ankle long connecting rod 35 through the first spherical bearing 37 and the first connecting rod pin shaft 38, and then an upper end of the ankle long connecting rod 35 can be driven to swing through the first ankle rocker arm swing member 36. Meanwhile, a lower end of the ankle long connecting rod 35 is hinged to the ankle connecting rod 12 through the second spherical bearing 39, and the lower end of the ankle long connecting rod 35 can swing relative to the ankle connecting rod 12 in a swinging process. Meanwhile, the power output end of the second ankle joint drive motor 8 drives the second ankle rocker arm swing member 42 through the second drive interface 46, the second ankle rocker arm swing member 42 is hinged to the ankle short connecting rod 41 through the third spherical bearing 43 and the second connecting rod pin shaft 44, and then an upper end of the ankle short connecting rod 41 can be driven to swing through the second ankle rocker arm swing member 42. Meanwhile, a lower end of the ankle short connecting rod 41 is hinged to the ankle connecting rod 12 through the fourth spherical bearing 45, and the lower end of the ankle short connecting rod 41 can swing relative to the ankle connecting rod 12 in a swinging process. The first ankle joint drive motor 7 and the second ankle joint drive motor 8 operate simultaneously during the movement of the shank mechanism, and operation directions of the first ankle joint drive motor 7 and the second ankle joint drive motor 8 can be controlled to be the same or opposite. That is, when the first ankle joint drive motor 7 drives the first rocker arm swing member 9 and the second ankle joint drive motor 8 drives the second rocker arm swing member 10 in the same direction, the ankle cross shaft member 11 performs forward swing motion relative to the shank structural member 6. When the first ankle joint drive motor 7 drives the first rocker arm swing member 9 and the second ankle joint drive motor 8 drives the second rocker arm swing member 10 in the opposite direction, the ankle cross shaft member 11 performs side swing motion relative to the shank structural member 6.

In conclusion, the embodiment of this disclosure is provided with the shank assembly 1, the ankle assembly 2, and the foot plate assembly 3; the shank assembly 1 includes the knee joint power output structural member 4, the knee joint passive end structural member 5, the shank structural member 6, the first ankle joint drive motor 7, the second ankle joint drive motor 8, the first rocker arm swing member 9, and the second rocker arm swing member 10; the ankle assembly 2 includes the ankle cross shaft member 11 and the ankle connecting rod 12; the knee joint drive motor 13 is arranged between the knee joint power output structural member 4 and the knee joint passive end structural member 5; the power output end of the knee joint drive motor 13 is connected to the knee joint power output structural member 4, and the other end of the knee joint drive motor 13 is connected to the knee joint passive end structural member 5; the upper portion of the shank structural member 6 is connected between the lower portion of the knee joint power output structural member 4 and the lower portion of the knee joint passive end structural member 5, the lower portion of the shank structural member 6 is connected to the ankle cross shaft member 11, and the ankle cross shaft member 11 is fixed above the foot plate assembly 3; the first motor mounting position 14 and the second motor mounting position 15 are formed on the shank structural member 6; the first ankle joint drive motor 7 is fixed to the first motor mounting position 14, the power output end of the first ankle joint drive motor 7 is connected to the upper portion of the first rocker arm swing member 9, and the lower portion of the first rocker arm swing member 9 is connected to one side of the ankle connecting rod 12; and the second ankle joint drive motor 8 is fixed to the second motor mounting position 15, the power output end of the second ankle joint drive motor 8 is connected to the upper portion of the second rocker arm swing member 10, and the lower portion of the second rocker arm swing member 10 is connected to the other side of the ankle connecting rod 12. The knee joint drive motor 13 is fixed by the knee joint passive end structural member 5 and the knee joint power output structural member 4, and the knee joint drive motor 13 drives the shank structural member 6 to swing back and forth through the knee joint power output structural member 4. The first ankle joint drive motor 7 drives an ankle assembly 2 to swing through the first rocker arm swing member 9, and the second ankle joint drive motor 8 drives the ankle assembly to swing through the second rocker arm swing member 10. The lower portions of the first rocker arm swing member 9 and the second rocker arm swing member 10 swing relative to the ankle connecting rod 12, and the shank structural member 6 swings relative to the ankle cross shaft member 11. When the first ankle joint drive motor 7 drives the first rocker arm swing member 9 and the second ankle joint drive motor 8 drives the second rocker arm swing member 10 in the same direction, the ankle cross shaft member 11 performs forward swing motion relative to the shank structural member 6. When the first ankle joint drive motor 7 drives the first rocker arm swing member 9 and the second ankle joint drive motor 8 drives the second rocker arm swing member 10 in the opposite direction, the ankle cross shaft member 11 performs side swing motion relative to the shank structural member 6. The ankle assembly 2 can drive the foot plate assembly 3 to perform corresponding forward swing and side swing motion. The first hinge clamping groove 17 and the transverse hinge portion 21 serve to connect the shank structural member 6 and the ankle cross shaft member 11, and the shank structural member 6 rotates relative to the transverse hinge portion 21 of the ankle cross shaft member 11 through the first hinge clamping groove 17. The second hinge clamping groove 18 and the longitudinal hinge portion 22 serve to connect the foot plate adapter 16 and the ankle cross shaft member 11, and the foot plate adapter 16 rotates relative to the longitudinal hinge portion 22 of the ankle cross shaft member 11 through the second hinge clamping groove 18. The transverse hinge portion 21 and the longitudinal hinge portion 22 form a cross-shaped ankle cross shaft member 11 through the transverse accommodating groove 19 and the longitudinal accommodating groove 20, so that the structure is more compact, and the activity flexibility is higher. The second ankle transverse shaft needle roller bearing 29 is sleeved inside the longitudinal accommodating groove 20, the second ankle transverse shaft body 30 is sleeved inside the second ankle transverse shaft needle roller bearing 29, and the front ankle transverse shaft gasket 31 and the rear ankle transverse shaft gasket 33 are respectively sleeved on front and rear sides of the longitudinal accommodating groove 20. After the foot plate adapter 16 is connected to the second ankle transverse shaft body 30 through the second hinge clamping groove 18, the foot plate adapter 16 is limited through the front ankle shaft end screw 32 and the rear ankle shaft end screw 34, so that the second ankle transverse shaft body 30 can rotate relative to the longitudinal accommodating groove 20, and then the foot plate adapter 16 rotates relative to the longitudinal hinge portion 22 of the ankle cross shaft member 11 through the second hinge clamping groove 18. The power output end of the first ankle joint drive motor 7 drives the first ankle rocker arm swing member 36 through the first drive interface 40, the first ankle rocker arm swing member 36 is hinged to the ankle long connecting rod 35 through the first spherical bearing 37 and the first connecting rod pin shaft 38, and then an upper end of the ankle long connecting rod 35 can be driven to swing through the first ankle rocker arm swing member 36. Meanwhile, a lower end of the ankle long connecting rod 35 is hinged to the ankle connecting rod 12 through the second spherical bearing 39, and the lower end of the ankle long connecting rod 35 can swing relative to the ankle connecting rod 12 in a swinging process. Meanwhile, the power output end of the second ankle joint drive motor 8 drives the second ankle rocker arm swing member 42 through the second drive interface 46, the second ankle rocker arm swing member 42 is hinged to the ankle short connecting rod 41 through the third spherical bearing 43 and the second connecting rod pin shaft 44, and then an upper end of the ankle short connecting rod 41 can be driven to swing through the second ankle rocker arm swing member 42. Meanwhile, a lower end of the ankle short connecting rod 41 is hinged to the ankle connecting rod 12 through the fourth spherical bearing 45, and the lower end of the ankle short connecting rod 41 can swing relative to the ankle connecting rod 12 in a swinging process. The first ankle joint drive motor 7 and the second ankle joint drive motor 8 operate simultaneously during the movement of the shank mechanism, and operation directions of the first ankle joint drive motor 7 and the second ankle joint drive motor 8 can be controlled to be the same or opposite. That is, when the first ankle joint drive motor 7 drives the first rocker arm swing member 9 and the second ankle joint drive motor 8 drives the second rocker arm swing member 10 in the same direction, the ankle cross shaft member 11 performs forward swing motion relative to the shank structural member 6. When the first ankle joint drive motor 7 drives the first rocker arm swing member 9 and the second ankle joint drive motor 8 drives the second rocker arm swing member 10 in the opposite direction, the ankle cross shaft member 11 performs side swing motion relative to the shank structural member 6. According to this disclosure, the shank structure is high in overall layout compactness and high in joint integration degree, so that a large movement range of a robot can be achieved, and flexibility and universality are improved.

## Claims

1. A simulation robot shank mechanism, comprising a shank assembly (1), an ankle assembly (2), and a foot plate assembly (3), wherein the shank assembly (1) comprises a knee joint power output structural member (4), a shank structural member (6), a first ankle joint drive motor (7), a second ankle joint drive motor (8), a first rocker arm swing member (9), and a second rocker arm swing member (10); the ankle assembly (2) comprises an ankle cross shaft member (11) and an ankle connecting rod (12); wherein
the simulation robot shank mechanism further comprises a knee joint drive motor (13); a power output end of the knee joint drive motor (13) is connected to the knee joint power output structural member (4);
a lower portion of the shank structural member (6) is connected to the ankle cross shaft member (11), and the ankle cross shaft member (11) is fixed above the foot plate assembly (3);
a first motor mounting position (14) and a second motor mounting position (15) are formed on the shank structural member (6); the first ankle joint drive motor (7) is fixed to the first motor mounting position (14), a power output end of the first ankle joint drive motor (7) is connected to an upper portion of the first rocker arm swing member (9), and a lower portion of the first rocker arm swing member (9) is connected to one side of the ankle connecting rod (12); and
the second ankle joint drive motor (8) is fixed to the second motor mounting position (15), a power output end of the second ankle joint drive motor (8) is connected to an upper portion of the second rocker arm swing member (10), and a lower portion of the second rocker arm swing member (10) is connected to the other side of the ankle connecting rod (12);
wherein a lower end of the ankle connecting rod (12) is provided with a foot plate adapter (16), the ankle cross shaft member (11) is connected to the foot plate adapter (16), and the foot plate adapter (16) is fixed above the foot plate assembly (3);
a first hinge clamping groove (17) is formed at a lower end of the shank structural member (6), and a second hinge clamping groove (18) is formed in the foot plate adapter (16);
a transverse accommodating groove (19) and a longitudinal accommodating groove (20) are formed in the ankle cross shaft member (11), the transverse accommodating groove (19) is provided with a transverse hinge portion (21), and the longitudinal accommodating groove (20) is provided with a longitudinal hinge portion (22); the transverse hinge portion (21) and the longitudinal hinge portion (22) are distributed in a cross shape;
the transverse hinge portion (21) is hinged to the first hinge clamping groove (17); and the longitudinal hinge portion (22) is hinged to the second hinge clamping groove (18);
**characterized in that**
the shank assembly (1) further comprises a knee joint passive end structural member (5);
the knee joint drive motor (13) is arranged between the knee joint power output structural member (4) and the knee joint passive end structural member (5), the other end of the knee joint drive motor (13) is connected to the knee joint passive end structural member (5);
an upper portion of the shank structural member (6) is connected between a lower portion of the knee joint power output structural member (4) and a lower portion of the knee joint passive end structural member (5);
the transverse hinge portion (21) comprises a first ankle transverse shaft needle roller bearing (23), a first ankle transverse shaft body (24), a left ankle transverse shaft gasket (25), a left ankle shaft end screw (26), a right ankle transverse shaft gasket (27), and a right ankle shaft end screw (28);
the first ankle transverse shaft needle roller bearing (23) is located inside the transverse accommodating groove (19), and the first ankle transverse shaft body (24) passes through a center of the first ankle transverse shaft needle roller bearing (23), a center of the left ankle transverse shaft gasket (25), and a center of the right ankle transverse shaft gasket (27); the left ankle transverse shaft gasket (25) is filled on one side of the transverse accommodating groove (19), and the right ankle transverse shaft gasket (27) is filled on the other side of the transverse accommodating groove (19);
one end of the first ankle transverse shaft body (24) is exposed on an outer side of the left ankle transverse shaft gasket (25), and the other end of the first ankle transverse shaft body (24) is exposed on an outer side of the right ankle transverse shaft gasket (27); the first hinge clamping groove (17) is hinged to the first ankle transverse shaft body (24) of the transverse hinge portion (21); and
the left ankle shaft end screw (26) is connected to one end of the first ankle transverse shaft body (24), and the right ankle shaft end screw (28) is connected to the other end of the first ankle transverse shaft body (24).

2. The simulation robot shank mechanism according to claim 1, wherein an orientation of the power output end of the first ankle joint drive motor (7) is opposite to an orientation of the power output end of the second ankle joint drive motor (8); and
a length of the first rocker arm swing member (9) is greater than that of the second rocker arm swing member (10).

3. The simulation robot shank mechanism according to claim 1, wherein the longitudinal hinge portion (22) comprises a second ankle transverse shaft needle roller bearing (29), a second ankle transverse shaft body (30), a front ankle transverse shaft gasket (31), a front ankle shaft end screw (32), a rear ankle transverse shaft gasket (33), and a rear ankle shaft end screw (34);
the second ankle transverse shaft needle roller bearing (29) is located inside the longitudinal accommodating groove (20), and the second ankle transverse shaft body (30) passes through a center of the second ankle transverse shaft needle roller bearing (29), a center of the front ankle transverse shaft gasket (31), and a center of the rear ankle transverse shaft gasket (33); the front ankle transverse shaft gasket (31) is filled on one side of the longitudinal accommodating groove (20), and the rear ankle transverse shaft gasket (33) is filled on the other side of the longitudinal accommodating groove (20);
one end of the second ankle transverse shaft body (30) is exposed on an outer side of the front ankle transverse shaft gasket (31), and the other end of the second ankle transverse shaft body (30) is exposed on an outer side of the rear ankle transverse shaft gasket (33); the second hinge clamping groove (18) is hinged to the second ankle transverse shaft body (30) of the longitudinal hinge portion (22); and
the front ankle shaft end screw (32) is connected to one end of the second ankle transverse shaft body (30), and the rear ankle shaft end screw (34) is connected to the other end of the second ankle transverse shaft body (30).

4. The simulation robot shank mechanism according to claim 1, wherein the first rocker arm swing member (9) comprises an ankle long connecting rod (35), a first ankle rocker arm swing member (36), a first spherical bearing (37), a first connecting rod pin shaft (38), and a second spherical bearing (39);
a first mounting hole is formed in an upper portion of the ankle long connecting rod (35), a second mounting hole is formed in a lower portion of the ankle long connecting rod (35), and the first ankle rocker arm swing member (36) is connected to the first mounting hole through the first spherical bearing (37) and the first connecting rod pin shaft (38); and the second spherical bearing (39) is connected to the second mounting hole, and the ankle long connecting rod (35) is hinged to one side of the ankle connecting rod (12) through the second spherical bearing (39).

5. The simulation robot shank mechanism according to claim 4, wherein a first drive interface (40) is formed in the first ankle rocker arm swing member (36), and the first ankle rocker arm swing member (36) is connected to the power output end of the first ankle joint drive motor (7) through the first drive interface (40).

6. The simulation robot shank mechanism according to claim 1, wherein the second rocker arm swing member (10) comprises an ankle short connecting rod (41), a second ankle rocker arm swing member (42), a third spherical bearing (43), a second connecting rod pin shaft (44), and a fourth spherical bearing (45);
a third mounting hole is formed in an upper portion of the ankle short connecting rod (41), a fourth mounting hole is formed in a lower portion of the ankle short connecting rod (41), and the second ankle rocker arm swing member (42) is connected to the third mounting hole through the third spherical bearing (43) and the second connecting rod pin shaft (44); and the fourth spherical bearing (45) is connected to the fourth mounting hole, and the ankle short connecting rod (41) is hinged to the other side of the ankle connecting rod (12) through the fourth spherical bearing (45).

7. The simulation robot shank mechanism according to claim 6, wherein a second drive interface (46) is formed in the second ankle rocker arm swing member (42), and the second ankle rocker arm swing member (42) is connected to the power output end of the second ankle joint drive motor (8) through the second drive interface (46).

## Patentansprüche

1. Ein Simulationsroboter-Unterschenkelmechanismus, umfassend eine Unterschenkelanordnung (1), eine Knöchelanordnung (2) und eine Fußplattenanordnung (3), wobei die Unterschenkelanordnung (1) ein Kniegelenk-Leistungsabgabe-Strukturelement (4), ein Unterschenkel-Strukturelement (6), einen ersten Knöchelgelenk-Antriebsmotor (7), einen zweiten Knöchelgelenk-Antriebsmotor (8), ein erstes Kipphebel-Schwenkelement (9) und ein zweites Kipphebel-Schwenkelement (10) umfasst; die Knöchelanordnung (2) ein Knöchel-Kreuzwellenelement (11) und eine Knöchel-Verbindungsstange (12) umfasst; wobei
der Simulationsroboter-Unterschenkelmechanismus ferner einen Kniegelenk-Antriebsmotor (13) umfasst; ein Leistungsabgabeende des Kniegelenk-Antriebsmotors (13) mit dem Kniegelenk-Leistungsabgabe-Strukturelement (4) verbunden ist;
ein unterer Abschnitt des Unterschenkel-Strukturelements (6) mit dem Knöchel-Kreuzwellenelement (11) verbunden ist und das Knöchel-Kreuzwellenelement (11) oberhalb der Fußplattenanordnung (3) befestigt ist;
eine erste Motoranbringungsposition (14) und eine zweite Motoranbringungsposition (15) an dem Unterschenkel-Strukturelement (6) ausgebildet sind; der erste Knöchelgelenk-Antriebsmotor (7) an der ersten Motoranbringungsposition (14) befestigt ist, ein Leistungsabgabeende des ersten Knöchelgelenk-Antriebsmotors (7) mit einem oberen Abschnitt des ersten Kipphebel-Schwenkelements (9) verbunden ist und ein unterer Abschnitt des ersten Kipphebel-Schwenkelements (9) mit einer Seite der Knöchel-Verbindungsstange (12) verbunden ist; und
der zweite Knöchelgelenk-Antriebsmotor (8) an der zweiten Motoranbringungsposition (15) befestigt ist, ein Leistungsabgabeende des zweiten Knöchelgelenk-Antriebsmotors (8) mit einem oberen Abschnitt des zweiten Kipphebel-Schwenkelements (10) verbunden ist und ein unterer Abschnitt des zweiten Kipphebel-Schwenkelements (10) mit der anderen Seite der Knöchel-Verbindungsstange (12) verbunden ist;
wobei ein unteres Ende der Knöchel-Verbindungsstange (12) mit einem Fußplattenadapter (16) versehen ist, das Knöchel-Kreuzwellenelement (11) mit dem Fußplattenadapter (16) verbunden ist und der Fußplattenadapter (16) oberhalb der Fußplattenanordnung (3) befestigt ist;
eine erste Gelenkklemmnut (17) an einem unteren Ende des Unterschenkel-Strukturelements (6) ausgebildet ist und eine zweite Gelenkklemmnut (18) in dem Fußplattenadapter (16) ausgebildet ist;
eine quer verlaufende Aufnahmenut (19) und eine längs verlaufende Aufnahmenut (20) in dem Knöchel-Kreuzwellenelement (11) ausgebildet sind, die quer verlaufende Aufnahmenut (19) mit einem quer verlaufenden Gelenkabschnitt (21) versehen ist und die längs verlaufende Aufnahmenut (20) mit einem längs verlaufenden Gelenkabschnitt (22) versehen ist; der quer verlaufende Gelenkabschnitt (21) und der längs verlaufende Gelenkabschnitt (22) kreuzförmig angeordnet sind;
der quer verlaufende Gelenkabschnitt (21) gelenkig mit der ersten Gelenkklemmnut (17) verbunden ist; und der längs verlaufende Gelenkabschnitt (22) gelenkig mit der zweiten Gelenkklemmnut (18) verbunden ist;
**dadurch gekennzeichnet, dass**
die Unterschenkelanordnung (1) ferner ein Kniegelenk-Passivend-Strukturelement (5) umfasst;
der Kniegelenk-Antriebsmotor (13) zwischen dem Kniegelenk-Leistungsabgabe-Strukturelement (4) und dem Kniegelenk-Passivend-Strukturelement (5) angeordnet ist, das andere Ende des Kniegelenk-Antriebsmotors (13) mit dem Kniegelenk-Passivend-Strukturelement (5) verbunden ist;
ein oberer Abschnitt des Unterschenkel-Strukturelements (6) zwischen einem unteren Abschnitt des Kniegelenk-Leistungsabgabe-Strukturelements (4) und einem unteren Abschnitt des Kniegelenk-Passivend-Strukturelements (5) verbunden ist;
der quer verlaufende Gelenkabschnitt (21) ein erstes Knöchel-Querwellen-Nadellager (23), einen ersten Knöchel-Querwellenkörper (24), eine linke Knöchel-Querwellendichtung (25), eine linke Knöchel-Wellenendschraube (26), eine rechte Knöchel-Querwellendichtung (27) und eine rechte Knöchel-Wellenendschraube (28) umfasst;
das erste Knöchel-Querwellen-Nadellager (23) innerhalb der quer verlaufenden Aufnahmenut (19) angeordnet ist und der erste Knöchel-Querwellenkörper (24) durch eine Mitte des ersten Knöchel-Querwellen-Nadellagers (23), eine Mitte der linken Knöchel-Querwellendichtung (25) und eine Mitte der rechten Knöchel-Querwellendichtung (27) verläuft; die linke Knöchel-Querwellendichtung (25) auf einer Seite der quer verlaufenden Aufnahmenut (19) eingefüllt ist und die rechte Knöchel-Querwellendichtung (27) auf der anderen Seite der quer verlaufenden Aufnahmenut (19) eingefüllt ist;
ein Ende des ersten Knöchel-Querwellenkörpers (24) an einer Außenseite der linken Knöchel-Querwellendichtung (25) freiliegt und das andere Ende des ersten Knöchel-Querwellenkörpers (24) an einer Außenseite der rechten Knöchel-Querwellendichtung (27) freiliegt; die erste Gelenkklemmnut (17) gelenkig mit dem ersten Knöchel-Querwellenkörper (24) des quer verlaufenden Gelenkabschnitts (21) verbunden ist; und
die linke Knöchel-Wellenendschraube (26) mit einem Ende des ersten Knöchel-Querwellenkörpers (24) verbunden ist und die rechte Knöchel-Wellenendschraube (28) mit dem anderen Ende des ersten Knöchel-Querwellenkörpers (24) verbunden ist.

2. Simulationsroboter-Unterschenkelmechanismus nach Anspruch 1, wobei eine Ausrichtung des Leistungsabgabeendes des ersten Knöchelgelenk-Antriebsmotors (7) einer Ausrichtung des Leistungsabgabeendes des zweiten Knöchelgelenk-Antriebsmotors (8) entgegengesetzt ist; und
eine Länge des ersten Kipphebel-Schwenkelements (9) größer als diejenige des zweiten Kipphebel-Schwenkelements (10) ist.

3. Simulationsroboter-Unterschenkelmechanismus nach Anspruch 1, wobei der längs verlaufende Gelenkabschnitt (22) ein zweites Knöchel-Querwellen-Nadellager (29), einen zweiten Knöchel-Querwellenkörper (30), eine vordere Knöchel-Querwellendichtung (31), eine vordere Knöchel-Wellenendschraube (32), eine hintere Knöchel-Querwellendichtung (33) und eine hintere Knöchel-Wellenendschraube (34) umfasst;
das zweite Knöchel-Querwellen-Nadellager (29) innerhalb der längs verlaufenden Aufnahmenut (20) angeordnet ist und der zweite Knöchel-Querwellenkörper (30) durch eine Mitte des zweiten Knöchel-Querwellen-Nadellagers (29), eine Mitte der vorderen Knöchel-Querwellendichtung (31) und eine Mitte der hinteren Knöchel-Querwellendichtung (33) verläuft; die vordere Knöchel-Querwellendichtung (31) auf einer Seite der längs verlaufenden Aufnahmenut (20) eingefüllt ist und die hintere Knöchel-Querwellendichtung (33) auf der anderen Seite der längs verlaufenden Aufnahmenut (20) eingefüllt ist;
ein Ende des zweiten Knöchel-Querwellenkörpers (30) an einer Außenseite der vorderen Knöchel-Querwellendichtung (31) freiliegt und das andere Ende des zweiten Knöchel-Querwellenkörpers (30) an einer Außenseite der hinteren Knöchel-Querwellendichtung (33) freiliegt; die zweite Gelenkklemmnut (18) gelenkig mit dem zweiten Knöchel-Querwellenkörper (30) des längs verlaufenden Gelenkabschnitts (22) verbunden ist; und
die vordere Knöchel-Wellenendschraube (32) mit einem Ende des zweiten Knöchel-Querwellenkörpers (30) verbunden ist und die hintere Knöchel-Wellenendschraube (34) mit dem anderen Ende des zweiten Knöchel-Querwellenkörpers (30) verbunden ist.

4. Simulationsroboter-Unterschenkelmechanismus nach Anspruch 1, wobei das erste Kipphebel-Schwenkelement (9) eine lange Knöchel-Verbindungsstange (35), ein erstes Knöchel-Kipphebel-Schwenkelement (36), ein erstes Gelenklager (37), einen ersten Verbindungsstangen-Stift (38) und ein zweites Gelenklager (39) umfasst;
eine erste Anbringungsbohrung in einem oberen Abschnitt der langen Knöchel-Verbindungsstange (35) ausgebildet ist, eine zweite Anbringungsbohrung in einem unteren Abschnitt der langen Knöchel-Verbindungsstange (35) ausgebildet ist und das erste Knöchel-Kipphebel-Schwenkelement (36) über das erste Gelenklager (37) und den ersten Verbindungsstangen-Stift (38) mit der ersten Anbringungsbohrung verbunden ist; und das zweite Gelenklager (39) mit der zweiten Anbringungsbohrung verbunden ist und die lange Knöchel-Verbindungsstange (35) über das zweite Gelenklager (39) gelenkig mit einer Seite der Knöchel-Verbindungsstange (12) verbunden ist.

5. Simulationsroboter-Unterschenkelmechanismus nach Anspruch 4, wobei eine erste Antriebsschnittstelle (40) in dem ersten Knöchel-Kipphebel-Schwenkelement (36) ausgebildet ist und das erste Knöchel-Kipphebel-Schwenkelement (36) über die erste Antriebsschnittstelle (40) mit dem Leistungsabgabeende des ersten Knöchelgelenk-Antriebsmotors (7) verbunden ist.

6. Simulationsroboter-Unterschenkelmechanismus nach Anspruch 1, wobei das zweite Kipphebel-Schwenkelement (10) eine kurze Knöchel-Verbindungsstange (41), ein zweites Knöchel-Kipphebel-Schwenkelement (42), ein drittes Gelenklager (43), einen zweiten Verbindungsstangen-Stift (44) und ein viertes Gelenklager (45) umfasst;
eine dritte Anbringungsbohrung in einem oberen Abschnitt der kurzen Knöchel-Verbindungsstange (41) ausgebildet ist, eine vierte Anbringungsbohrung in einem unteren Abschnitt der kurzen Knöchel-Verbindungsstange (41) ausgebildet ist und das zweite Knöchel-Kipphebel-Schwenkelement (42) über das dritte Gelenklager (43) und den zweiten Verbindungsstangen-Stift (44) mit der dritten Anbringungsbohrung verbunden ist; und das vierte Gelenklager (45) mit der vierten Anbringungsbohrung verbunden ist und die kurze Knöchel-Verbindungsstange (41) über das vierte Gelenklager (45) gelenkig mit der anderen Seite der Knöchel-Verbindungsstange (12) verbunden ist.

7. Simulationsroboter-Unterschenkelmechanismus nach Anspruch 6, wobei eine zweite Antriebsschnittstelle (46) in dem zweiten Knöchel-Kipphebel-Schwenkelement (42) ausgebildet ist und das zweite Knöchel-Kipphebel-Schwenkelement (42) über die zweite Antriebsschnittstelle (46) mit dem Leistungsabgabeende des zweiten Knöchelgelenk-Antriebsmotors (8) verbunden ist.

## Revendications

1. Mécanisme de jarret de robot de simulation, comprenant un ensemble jarret (1), un ensemble cheville (2) et un ensemble plaque de pied (3), dans lequel l'ensemble jarret (1) comprend un organe structurel de sortie de puissance d'articulation de genou (4), un organe structurel de jarret (6), un premier moteur d'entraînement d'articulation de cheville (7), un deuxième moteur d'entraînement d'articulation de cheville (8), un premier organe de balancement de bras oscillant (9) et un deuxième organe de balancement de bras oscillant (10) ; l'ensemble cheville (2) comprend un organe arbre transversal de cheville (11) et une bielle de cheville (12) ; dans lequel
le mécanisme de jarret de robot de simulation comprend en outre un moteur d'entraînement d'articulation de genou (13) ; une extrémité de sortie de puissance du moteur d'entraînement d'articulation de genou (13) est reliée à l'organe structurel de sortie de puissance d'articulation de genou (4) ;
une partie inférieure de l'organe structurel de jarret (6) est reliée à l'organe arbre transversal de cheville (11), et l'organe arbre transversal de cheville (11) est fixé au-dessus de l'ensemble plaque de pied (3) ;
une première position de montage de moteur (14) et une deuxième position de montage de moteur (15) sont formées sur l'organe structurel de jarret (6) ; le premier moteur d'entraînement d'articulation de cheville (7) est fixé à la première position de montage de moteur (14), une extrémité de sortie de puissance du premier moteur d'entraînement d'articulation de cheville (7) est reliée à une partie supérieure du premier organe de balancement de bras oscillant (9), et une partie inférieure du premier organe de balancement de bras oscillant (9) est reliée à un côté de la bielle de cheville (12) ; et
le deuxième moteur d'entraînement d'articulation de cheville (8) est fixé à la deuxième position de montage de moteur (15), une extrémité de sortie de puissance du deuxième moteur d'entraînement d'articulation de cheville (8) est reliée à une partie supérieure du deuxième organe de balancement de bras oscillant (10), et une partie inférieure du deuxième organe de balancement de bras oscillant (10) est reliée à l'autre côté de la bielle de cheville (12) ;
dans lequel une extrémité inférieure de la bielle de cheville (12) est pourvue d'un adaptateur de plaque de pied (16), l'organe arbre transversal de cheville (11) est relié à l'adaptateur de plaque de pied (16), et l'adaptateur de plaque de pied (16) est fixé au-dessus de l'ensemble plaque de pied (3) ;
une première rainure de serrage de charnière (17) est formée au niveau d'une extrémité inférieure de l'organe structurel de jarret (6), et une deuxième rainure de serrage de charnière (18) est formée dans l'adaptateur de plaque de pied (16) ;
une rainure de réception transversale (19) et une rainure de réception longitudinale (20) sont formées dans l'organe arbre transversal de cheville (11), la rainure de réception transversale (19) est pourvue d'une partie charnière transversale (21), et la rainure de réception longitudinale (20) est pourvue d'une partie charnière longitudinale (22) ; la partie charnière transversale (21) et la partie charnière longitudinale (22) sont réparties selon une forme en croix ;
la partie charnière transversale (21) est articulée sur la première rainure de serrage de charnière (17) ; et la partie charnière longitudinale (22) est articulée sur la deuxième rainure de serrage de charnière (18) ;
**caractérisé en ce que**
l'ensemble jarret (1) comprend en outre un organe structurel d'extrémité passive d'articulation de genou (5) ;
le moteur d'entraînement d'articulation de genou (13) est agencé entre l'organe structurel de sortie de puissance d'articulation de genou (4) et l'organe structurel d'extrémité passive d'articulation de genou (5), l'autre extrémité du moteur d'entraînement d'articulation de genou (13) est reliée à l'organe structurel d'extrémité passive d'articulation de genou (5) ;
une partie supérieure de l'organe structurel de jarret (6) est reliée entre une partie inférieure de l'organe structurel de sortie de puissance d'articulation de genou (4) et une partie inférieure de l'organe structurel d'extrémité passive d'articulation de genou (5) ;
la partie charnière transversale (21) comprend un premier roulement à aiguilles d'arbre transversal de cheville (23), un premier corps d'arbre transversal de cheville (24), un joint d'arbre transversal de cheville gauche (25), une vis d'extrémité d'arbre de cheville gauche (26), un joint d'arbre transversal de cheville droit (27), et une vis d'extrémité d'arbre de cheville droite (28) ;
le premier roulement à aiguilles d'arbre transversal de cheville (23) est situé à l'intérieur de la rainure de réception transversale (19), et le premier corps d'arbre transversal de cheville (24) passe à travers un centre du premier roulement à aiguilles d'arbre transversal de cheville (23), un centre du joint d'arbre transversal de cheville gauche (25), et un centre du joint d'arbre transversal de cheville droit (27) ; le joint d'arbre transversal de cheville gauche (25) est inséré sur un côté de la rainure de réception transversale (19), et le joint d'arbre transversal de cheville droit (27) est inséré sur l'autre côté de la rainure de réception transversale (19) ;
une extrémité du premier corps d'arbre transversal de cheville (24) est exposée sur un côté externe du joint d'arbre transversal de cheville gauche (25), et l'autre extrémité du premier corps d'arbre transversal de cheville (24) est exposée sur un côté externe du joint d'arbre transversal de cheville droit (27) ; la première rainure de serrage de charnière (17) est articulée sur le premier corps d'arbre transversal de cheville (24) de la partie charnière transversale (21) ; et
la vis d'extrémité d'arbre de cheville gauche (26) est reliée à une extrémité du premier corps d'arbre transversal de cheville (24), et la vis d'extrémité d'arbre de cheville droite (28) est reliée à l'autre extrémité du premier corps d'arbre transversal de cheville (24).

2. Mécanisme de jarret de robot de simulation selon la revendication 1, dans lequel une orientation de l'extrémité de sortie de puissance du premier moteur d'entraînement d'articulation de cheville (7) est opposée à une orientation de l'extrémité de sortie de puissance du deuxième moteur d'entraînement d'articulation de cheville (8) ; et
une longueur du premier organe de balancement de bras oscillant (9) est plus grande que celle du deuxième organe de balancement de bras oscillant (10).

3. Mécanisme de jarret de robot de simulation selon la revendication 1, dans lequel la partie charnière longitudinale (22) comprend un deuxième roulement à aiguilles d'arbre transversal de cheville (29), un deuxième corps d'arbre transversal de cheville (30), un joint d'arbre transversal de cheville avant (31), une vis d'extrémité d'arbre de cheville avant (32), un joint d'arbre transversal de cheville arrière (33) et une vis d'extrémité d'arbre de cheville arrière (34) ;
le deuxième roulement à aiguilles d'arbre transversal de cheville (29) est situé à l'intérieur de la rainure de réception longitudinale (20), et le deuxième corps d'arbre transversal de cheville (30) passe à travers un centre du deuxième roulement à aiguilles d'arbre transversal de cheville (29), un centre du joint d'arbre transversal de cheville avant (31), et un centre du joint d'arbre transversal de cheville arrière (33) ; le joint d'arbre transversal de cheville avant (31) est inséré sur un côté de la rainure de réception longitudinale (20), et le joint d'arbre transversal de cheville arrière (33) est inséré sur l'autre côté de la rainure de réception longitudinale (20) ;
une extrémité du deuxième corps d'arbre transversal de cheville (30) est exposée sur un côté externe du joint d'arbre transversal de cheville avant (31), et l'autre extrémité du deuxième corps d'arbre transversal de cheville (30) est exposée sur un côté externe du joint d'arbre transversal de cheville arrière (33) ; la deuxième rainure de serrage de charnière (18) est articulée sur le deuxième corps d'arbre transversal de cheville (30) de la partie charnière longitudinale (22) ; et
la vis d'extrémité d'arbre de cheville avant (32) est reliée à une extrémité du deuxième corps d'arbre transversal de cheville (30), et la vis d'extrémité d'arbre de cheville arrière (34) est reliée à l'autre extrémité du deuxième corps d'arbre transversal de cheville (30).

4. Mécanisme de jarret de robot de simulation selon la revendication 1, dans lequel le premier organe de balancement de bras oscillant (9) comprend une bielle longue de cheville (35), un premier organe de balancement de bras oscillant de cheville (36), un premier palier sphérique (37), un premier arbre de broche de bielle (38) et un deuxième palier sphérique (39) ;
un premier trou de montage est formé dans une partie supérieure de la bielle longue de cheville (35), un deuxième trou de montage est formé dans une partie inférieure de la bielle longue de cheville (35), et le premier organe de balancement de bras oscillant de cheville (36) est relié au premier trou de montage à travers le premier palier sphérique (37) et le premier arbre de broche de bielle (38) ; et le deuxième palier sphérique (39) est relié au deuxième trou de montage, et la bielle longue de cheville (35) est articulée sur un côté de la bielle de cheville (12) à travers le deuxième palier sphérique (39).

5. Mécanisme de jarret de robot de simulation selon la revendication 4, dans lequel une première interface d'entraînement (40) est formée dans le premier organe de balancement de bras oscillant de cheville (36), et le premier organe de balancement de bras oscillant de cheville (36) est relié à l'extrémité de sortie de puissance du premier moteur d'entraînement d'articulation de cheville (7) à travers la première interface d'entraînement (40).

6. Mécanisme de jarret de robot de simulation selon la revendication 1, dans lequel le deuxième organe de balancement de bras oscillant (10) comprend une bielle courte de cheville (41), un deuxième organe de balancement de bras oscillant de cheville (42), un troisième palier sphérique (43), un deuxième arbre de broche de bielle (44) et un quatrième palier sphérique (45) ;
un troisième trou de montage est formé dans une partie supérieure de la bielle courte de cheville (41), un quatrième trou de montage est formé dans une partie inférieure de la bielle courte de cheville (41), et le deuxième organe de balancement de bras oscillant de cheville (42) est relié au troisième trou de montage à travers le troisième palier sphérique (43) et le deuxième arbre de broche de bielle (44) ; et le quatrième palier sphérique (45) est relié au quatrième trou de montage, et la bielle courte de cheville (41) est articulée sur l'autre côté de la bielle de cheville (12) à travers le quatrième palier sphérique (45).

7. Mécanisme de jarret de robot de simulation selon la revendication 6, dans lequel une deuxième interface d'entraînement (46) est formée dans le deuxième organe de balancement de bras oscillant de cheville (42), et le deuxième organe de balancement de bras oscillant de cheville (42) est relié à l'extrémité de sortie de puissance du deuxième moteur d'entraînement d'articulation de cheville (8) à travers la deuxième interface d'entraînement (46).
